(19) Europäisches Patentamt
European Patent Office
Office européen des brevets

(11) **EP 4 184 484 A1**

(12) **EUROPEAN PATENT APPLICATION**

(43) Date of publication:
**24.05.2023 Bulletin 2023/21**

(51) International Patent Classification (IPC):
***G09B 23/30*** *(2006.01)*

(21) Application number: **21209156.5**

(52) Cooperative Patent Classification (CPC):
**G09B 23/303**

(22) Date of filing: **18.11.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Otto-von-Guericke-University Magdeburg**
**39106 Magdeburg (DE)**

(72) Inventors:
• **AMINI, Amir**
**10587 Berlin (DE)**
• **DR. NEYAZI, Belal**
**39108 Magdeburg (DE)**
• **PROF. SANDALCIOGLU, Erol**
**39104 Magdeburg (DE)**

(54) **AN EX VIVO SKULL AND/OR BRAIN STRUCTURE MODEL, A PROCESS FOR THE MANUFACTURE AND USES THEREOF**

(57) The present invention discloses an *ex vivo* model of a skull and/or brain structure obtainable by the process comprising the steps of: providing one or more imaging data sets of a skull and/or brain structure of a subject, particularly of a patient; reconstructing and/or segmenting the skull and/or brain structure of the subject/patient based on the imaging data sets obtained/provided for under step a) using a suitable computer program; three-dimensional printing of the reconstructed and/or segmented skull and/or brain structure data obtained under step b); and in case of the brain structure, forming a negative model of the obtained brain structure under step c); and casting a surrogate brain structure of the said subject/patient from the negative model obtained under step d) using a gelatin substance; and in case of the skull and brain structure, combining the obtained skull and brain structure, so to form the *ex vivo* model. Further the present invention relates to such a process and to uses of the said *ex vivo* model of a skull and/or brain structure, particularly as an external ventricular drain model.

## Description

### Technical Field

The present invention relates to an ex *vivo* model of a skull and/or brain structure of a subject, e.g. a patient, and to a method for the manufacture thereof as well as to uses thereof. Particularly, the present invention relates to such an ex *vivo* skull and brain structure model for simulating an aneurysm, a brain tumour or the like, but especially an external ventricular drain (hereinafter abbreviated EVD) intervention under a wet environment condition, e.g., for training or pre-operative purposes.

### Background

In the Life Sciences the expression "simulation" provides for representations of certain key characteristics or behaviors of a selected physical or abstract system. Simulations can be used to show the effects of particular courses of action such as medical, particularly surgical, interventions. A "physical simulation" is a simulation in which physical objects are substituted for a real thing or entity. Physical simulations are often used in interactive simulations involving a human operator for educational and/or training purposes. For example, mannequin patient simulators are used in the medical field, flight simulators and driving simulators are used in various industries, and tank simulators may be used in military training.

Physical simulations or objects provide a real tactile and haptic feedback for a human operator and a 3-dimensional (3D) interaction perspective suited for learning psychomotor and spatial skills, especially in the fields of surgery.

In the health care industry, as an example, medical simulators are being developed to teach therapeutic and diagnostic procedures, medical concepts, and decision-making skills. These days, medical simulators typically involve a computer or processor connected to a physical representation of a patient, which have been broadly adopted and consist of an instrumented mannequin that can sense certain interventions, and via mathematical models of physiology and pharmacology, the mannequin reacts appropriately in real time. For instance, real medical instruments and devices can be used with life-size patient simulators and proper technique and mechanics can be learned.

Moreover, virtual abstract simulations are well known, such as transparent reality simulations of anesthesia machines and medical equipment or drug dissemination during spinal anesthesia, which do emphasize internal structure, functions and processes of a simulated system. Gases, fluids and substances that are usually invisible or hidden can be made visible or even color-coded and their flow and propagation can be visualized within the system. However, in a virtual simulation without the use of haptic gloves, the simulator cannot be directly touched like a physical simulation. In the virtual simulations, direct interaction using one's hands or real instruments such as laryngoscopes or a wrench is also difficult to simulate. This holds especially true for brain surgery (see further below). For example, it can be difficult to simulate a direct interaction such as turning an oxygen flowmeter knob or opening a spare oxygen cylinder in the back of the anesthesia machine.

In addition, important tactile and haptic cues, such as the deliberately fluted texture of an oxygen flowmeter knob in an anesthesia machine or the pressure in a needle/syringe felt when moving through fat and muscle or impinging on bone structures, are missing. Furthermore, the emphasis on internal processes and structure may cause the layout of the resulting virtual simulation to be abstracted and simplified and thus different from the actual physical layout of the real system. This abstract representation, while suited for assisting learning by simplification and visualization, may present challenges when transferring what was learned to the actual physical system.

Especially in the modern era of neurosurgery, traditional teaching methods often fail to provide young neurosurgeons with a proper haptic, tactile and hands-on training needed to hone their skills and to meet the challenges of a demanding residency program. The above introduced physical simulators may provide the freedom of focused, hands-on training in a more controlled environment. However, the adoption of such simulators in neurosurgical training still remains a tremendous challenge due to regularly high acquisition costs, complex production, lack of realism and a typical lack of multiple uses thereof, or, e.g., not being able to demonstrate a wet environment condition for decisive bodily fluids involved in surgery training.

The prior art of neurosurgical training still consists mostly of observing and assisting in surgery, video training and cadaveric simulation, exemplified as the Halstedian "*see one, do one, teach one*" approach [1]. However, in the high-risk, high-stake specialty of neurosurgery with little margin for error, this approach often fails to provide residents with the exposure and training needed to become adept surgeons [2]. With the rapid advancement in technology and its accessibility, software-based simulations have emerged and showed promise to greatly enhance surgical training [34, 5, 6]. Although Virtual Reality-based simulations have become extremely useful tools in medical education, the lack of haptic feedback properties and hands-on experience still greatly limits their usability as surgical training tools [7].

Following the above, cadaveric simulation is also not a viable option for most neurosurgical procedures either since preservation techniques and the absence of cerebral perfusion and cerebrospinal fluid flow change the tactile properties of brain tissue and the ventricular system tends to be distorted or collapsed [8].

One of the most important neurosurgical procedures is the placement of an external ventricular drain (EVD) [9]. At the same time, being a crucial procedure in the care of life-threating acute conditions, correct EVD placement is also a procedure every neurosurgeon should master early in their careers, emphasizing the importance of and the need for effective surgical training tools.

So far, several projects have taken up the challenge to build physical simulators for EVD placement [10, 11, 12]. But, as said before, the adoption of such simulators in daily neurosurgical training and practice remains a challenge due to their high acquisition and operating costs, complex and time-consuming production process and limited usability [13].

Accordingly, there continues to be a strong-felt need for an improved simulation system capable of in-context integration of virtual representations or medical imaging-based data with a physical simulation or object, especially in the field of skull and/or brain surgery.

## Problem underlying the invention

An increasing complexity of neurosurgical procedures as well as an increasing focus on patient safety necessitate effective neurosurgical training tools. Limitations to cadaveric and software-based simulations such as lack of physiological accuracy reflected in living patients and absence of real-world resemblances emphasize the need for high-fidelity physical simulators. However, the utilization of physical simulators in neurosurgical training remains a challenge due to their limited usability, lack of realism, high acquisition and operating costs or complex and time-consuming production processes.

In view of all the above, a problem underlying the invention is to overcome the aforementioned limitations while applying a method to build a high fidelity, easily reproducible and cost-effective ex *vivo* skull and/or brain structure model with life-like skull and/or tactile brain characteristics based on a real subjects'/patients' data. The said model shall *inter alia* serve as a practical educational tool for young neurosurgeons; for example for the training of key steps of an EVD placement, but likewise in terms of an aneurysm or brain tumour etc. It was another problem of the invention to allow for more than one access point, for e.g., EVD placement, i.e., not only via the Kocher's point. A further problem was simultaneously to allow for a wet environment model that, e.g., allows for the backflow of a cerebrospinal fluid (CSF) surrogate for the sake of an immediate success control of trained intervention.

## Description of the invention

The aforementioned problems of the invention are overcome by the provided ex vivo skull and/or brain structure model according to the claims, especially claim 1, and the process claims as well as the use claims. Further details, alternatives, additional features can be derived from all the dependent claims and from the embodiments disclosed herein in view of the figure and example portion.

The skilled person readily acknowledges that the herein disclosed embodiments may be combined in various ways and adjusted for certain skull and/or brain simulant models despite the detailed EVD model.

## Figure description

The following Figures and its respective description portions shall be understood for illustrating certain aspects of the invention, but without being limited thereto:

**Figure 1** shows on the left portion skull, brain, and ventricle reconstructions using the computer programs "InVesalius3", "Freesurfer" and "blender" and on the right portion a printed 3D model within the scope of the invention.

**Figure 2** shows on the left ventricle reconstruction in "InVesalius 3" and on the right a brain model resulting from "FreeSurfer" automated segmentation.

**Figure 3** shows on the left and in the middle a mesh structure of the brain and ventricle system and on the right a three-dimensional brain model.

**Figure 4 a)** shows testing tubes filled with gelatin 260 bloom in 7.5 %, 12.5 %, and 17.5 % concentrations; **b)** shows an agarose mold for preparation of 260 bloom gelatin samples; and **c)** shows that three-cycle compression tests were executed on a Bose Electroforce System.

**Figure 5** shows the combination of gelatin-based brain simulant with the 3D-printed skull base in accordance with the present invention, especially for an EVD simulant.

**Figure 6** shows on the left the anatomical landmarks being used for identifying Kocher's point; in the top right a successful cannulation of a ventricle through Kocher's point; on the bottom right a successful cannulation of the ventricle through Frazier's point.

**Figure 7** shows a bar chart for the ranges of agreement for the criteria of the questionnaire regarding "*The model accurately depicts the steps* of *an EVD placement*" with a total number of 7 participants agreeing therewith, and 4 strongly agreeing therewith.

**Figure 8** shows a bar chart for the ranges of agreement for the criteria of the questionnaire regarding "*The simulator will help residents prepare for ventriculostomies*" with a total number of 3 participants agreeing therewith and even 9 participants being in strong agreement therewith.

**Figure 9** shows stretch vs. stress curves derived using three cycle compression tests on gelatin samples with 5%, 7.5%, 12.5% and 17.5% gelatin concentrations.

**Figure 10** shows stretch vs. stress courses derived by implementing stress of (a) 0.2 kPa, (b) 0.6 kPa and (c) 1.2 kPa on samples with 12.5 % gelatin concentration.

**Figure 11** shows stretch vs. stress graph derived by applying frequency of (a) 1 Hz, (b) 0.1 Hz and (c) 0.01 Hz for the test using samples with 12.5 % gelatin concentration.

## Examples

In the following, whole brain and skull reconstruction from patient's computed tomography (CT) and magnet resonance imaging (MRI) data were achieved using freeware and a desktop 3D printer. Subsequently, a negative brain silicone mold was created. Based on neurosurgical expertise as well as rheological measurements of brain tissue, gelatin in various concentrations was used to cast tactilely realistic brain simulants. A sample group of 16 neurosurgeons and medical students tested and evaluated the simulator of the present invention in respect to realism, haptics and general usage, scored on a 5-point Likert scale.

The below examples adhere to the SQUIRE 2.0 guidelines. The examples summarize processes for the manufacture of the herein disclosed skull and/or brain structure model, here a whole skull and brain structure model of a specific patient, especially used as EVD simulator, as well as testing of the model and uses thereof. All the given information shall be understood as exemplarily, and not as being limited to the given examples.

## Data Acquisition

Firstly, image datasets of an 83-year-old male patient with hydrocephalus were obtained using the various imaging modalities of computed tomography (CT), computed tomography angiography (CTA) as well as magnetic resonance imaging (MRI); though additional or alternative medical imaging modalities are considerable within the scope of the present invention.

Secondly, the acquired imaging data were used for thresholding-based segmentation and reconstruction of the skull and brain of the said patient. It shall be noted that the herein disclosed subject-matter of the invention may be likewise applied to a skull or a brain structure in the sense of specific parts thereof or as a whole, but for itself, and so not necessarily must be combined. But especially for the herein disclosed and improved EVD placement training the segmentation and reconstruction of the skull and brain of a subject, e. g. a patient, are required.

## Reconstruction

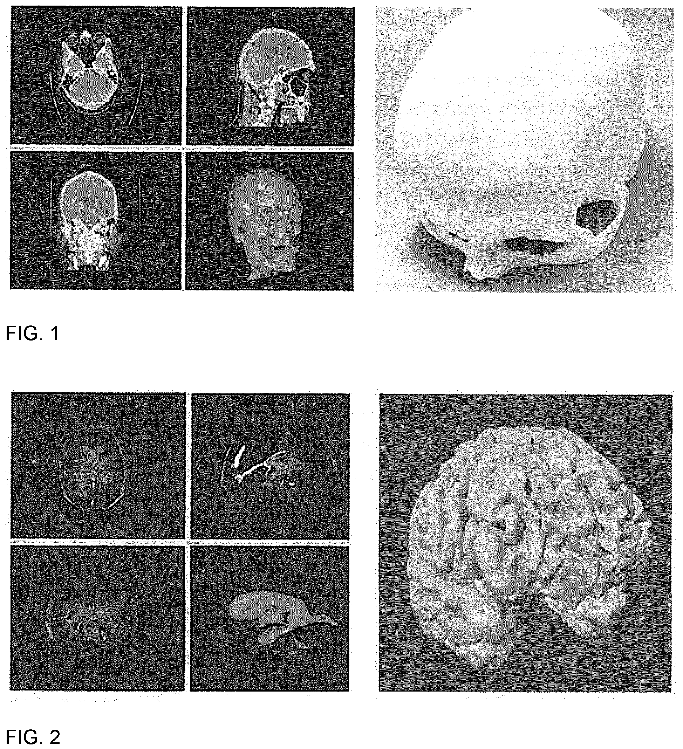

The said skull and brain reconstructions, particularly including ventricular reconstructions, were executed with the exemplary computer program "InVesalius3", an open-software solution for reconstructing CT and MRI images developed by Centro de Technologia da Informação Renato Archer (CTI) in Brazil. CTA dataset was used to create a 3D-model of the whole head of the said patient with segmentation defined by greyscale boundaries. Ventricle segmentation was achieved using the same patient's MRI dataset and manually segmenting the ventricle system as a whole from lateral ventricles to the fourth ventricle. Whole brain reconstruction was performed on a Linux-based Virtual Machine while applying the exemplary computer program "FreeSurfer" (Harvard University, Cambridge, Massachusetts, USA). It enables the user to create a 3D-model of the pial surface of the brain, which is then convertible into a 3D-printable STL file. Modifications to brain and ventricles were achieved with the exemplary computer program "blender", an open-source 3D creation software (The Blender Foundation). Hereto see Figs. 1 to 3.

**3D Printing and Silicone Casting**

Exemplarily a "Raise3D Pro2" 3D-Printer has been used to generate the skull and haptic brain models from the aforementioned segmented and reconstructed data. The material used was exemplarily a 1.75 mm thick PLA-Filament made by "Prima". Printing temperature was exemplary set to 201°C, but not limited to, and the printer heat bed was constantly tempered at, e.g., 65°C. Layer height and filler density were set to 0.25 mm and 15 %, respectively. Modifications to the filler density of the skull were exemplarily executed with the computer program "IdeaMaker", a 3D slicer software (Raise 3D Technologies, Inc.). Using doubling silicone (Wagnersil) as an example with a pot life of, e.g., 5-6 minutes, a negative mold of the brain model was created. It is demoldable after about 30 min. with a resulting hardness of 22 Shore A. This negative mold was in turn used to cast exemplary brain models in the further below described process.

**Emulating brain tissue properties**

To mimic the brain tissue with tactile real-life features, the present inventors surprisingly and unexpectedly found that specifically 260 bloom gelatin, but not being limited thereto, provided an improved material for manufacture of the brain model that is not only readily available on the market, but also easily modifiable and durable, but simultaneously, cannot be applied in each and every concentration thereof. Rather specific concentration ranges only allow for a native-like tactile behavior of the artificial brain tissue, of utmost importance for neurosurgeon trainees or professionals when training brain interventions or even for simulating an almost real-life pre-operative setting.

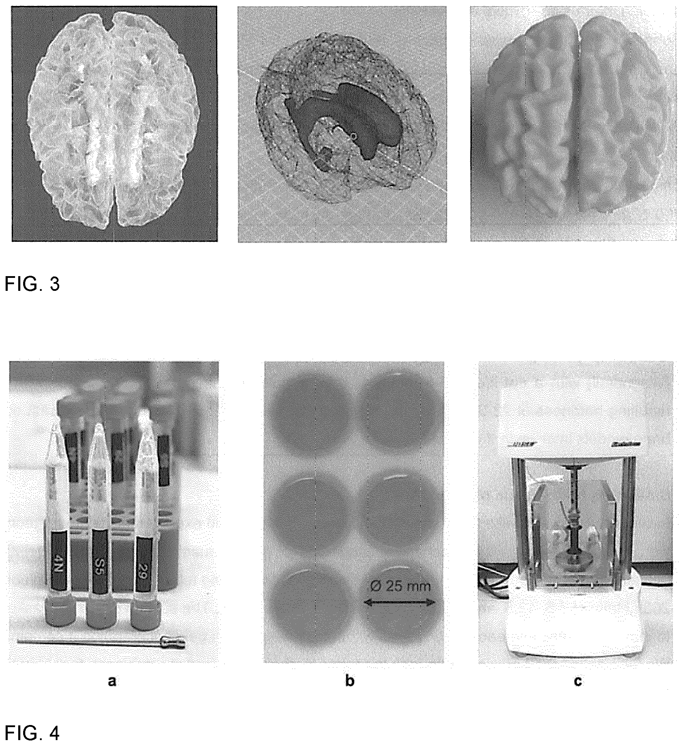

The inventors, for instance, filled testing tubes with 260 bloom gelatin in a 7.5 %, 12.5 %, and 17.5 % concentration, respectively. Then, six experienced neurosurgeons were asked to insert cannulas into each testing tube, without knowing which gel concentration it contained, and rank the tubes by their perceived haptic resemblance to real brain tissue; see Fig. 4 a.

**Rheological measurements**

In order to prepare gelatin samples for rheological tests, a mold was prepared out of a 1 % agarose and filled up with a 5 %, 7.5 %, 12.5 % and 17.5 % concentration of the said bloom 260 gelatin. After keeping the samples for a day in a refrigerator, the samples were removed from the mold. This technique allowed to create samples with smooth and even surfaces. This method is especially helpful in preparing and handling samples with low gelatin concentration. Differences in melting temperatures of gelatin and agarose were helpful in avoiding interfusion of mold and samples. Subsequently, the samples were placed into a Bose Electroforce System (see Fig. 4 c) and went through a three-cycle compression test. Additionally, the effect of frequency and different loads on the results were investigated. The exemplary samples used in these tests had a diameter of 25 mm with a thickness of 6 mm.

Three-cycle compression tests with frequencies of 0.01 Hz, 0.1 Hz and 1 Hz, respectively, were conducted on bloom 260 gelatin in a 5 %, 7.5 %, 12.5 % and 17.5 % concentration. Three different stresses (0.2 kPa, 0.6 kPa and 1.2 kPa) were applied to the samples. It should be noted that the stretch and stress parameters were derived using the following relations:

$$stretch = \frac{L_t}{L_0} = \frac{L_0 + \Delta L}{L_0} = 1 + \frac{\Delta L}{L_0} = 1 + \varepsilon$$

$$\sigma = \frac{F_{axial}}{A_0}$$

where $L_0$ is the initial length of the sample, $L_t$ is the length of the sample after applying the axial force, $\Delta L$ is the change in the length of the sample after applying the force, $\varepsilon$ is the strain of the sample, $\sigma$ is the stress, $F_{axial}$ is the axial force and $A_0$ is the initial cross section area of the samples.

Six board-certified neurosurgeons found the tactile properties of the samples with a 12.5 % gelatin as most similar to the brain tissue of alive patients. Therefore, 260 bloom gelatin in a 12.5 % concentration was surprisingly and unexpectedly found to be especially useful for mimicking brain tissue in an ex vivo brain model, but not being limited thereto. To determine the effect of frequency, the samples were subjected to 1 Hz, 0.1 Hz and 0.01 Hz, respectively, with the maximum stress of 1.2 kPa. These conditions are comparable to the maximum pressure exerted on human brain samples in previous studies performed by Prange M. et al. [14], Franceschini G. et al. [15] and Budday S. et al. [16, 17].

**Simulating cerebrospinal fluid flow**

Since the aforementioned computer program "FreeSurfer" creates a very detailed brain model with a high mesh density, "MeshLabs" "Simplification Filter" has been exemplarily used to reduce the triangle count of the 3D-model and facilitate the silicone molding process with emphasis on the ventricle system.

The specific 12.5 % gelatin brain model was attached to a base plate with two tube fittings. One was connected to a water bucket positioned on a pedestal and filled with enough water to generate a water pressure of approximately 30 $cmH_2O$. The second tube led to another bucket on the ground. This configuration allows for the de-aeration of the ventricles. After water flow was established, the efferent tube was constricted with a clamp to raise the water pressure within the ventricle.

**Participants for testing the skull and brain structure model**

Sixteen participants had been recruited, who were divided into two groups: eight medical students with involvement in neurosurgical research projects and eight neurosurgeons and neurosurgery residents with extensive experience in EVD placement. None of the medical students had performed ventriculostomies before, whereas all of the participating physicians were very proficient in the procedure.

**Testing design**

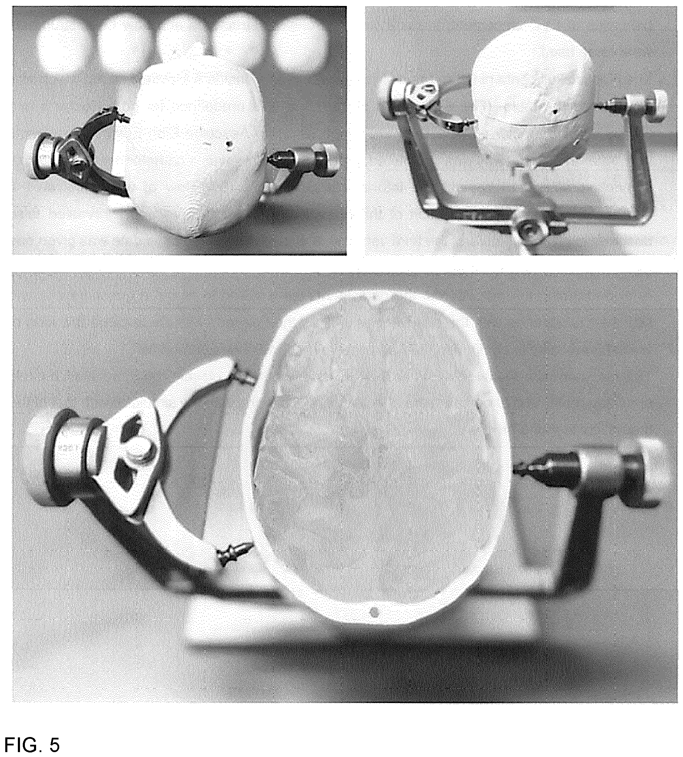

Each participant was given an introductory presentation about the basic principles of EVD placement, the anatomically relevant structures and how the instruments are used. The skull model containing the brain simulant was fixed inside a standard cranial stabilization clamp; see Fig. 5. Position of the head was predefined for both Kocher's and Frazier's point puncture. Craniotomy was performed using a rose-head burr. After the craniotomy was completed, participants were given a catheter used for external ventricle drainage (EVD) to be inserted into a lateral ventricle.

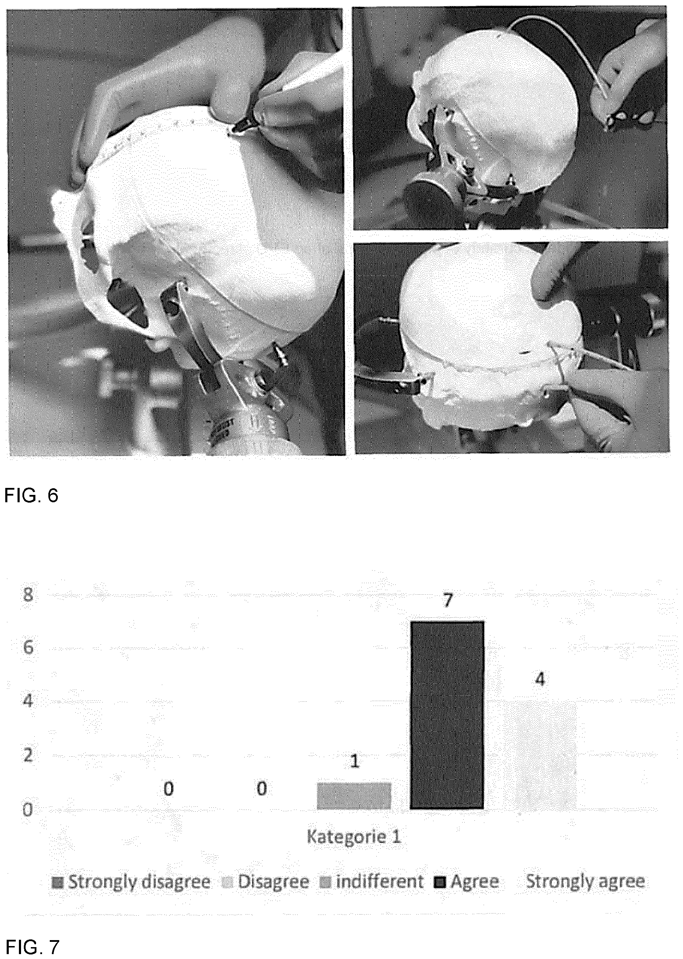

Backflow of water indicated a successful cannulation (i. e. testing under a wet environment condition simulating flow of cerebrospinal fluid by water), post-puncture inspection of the branch canal revealed false positives such as puncture of the third ventricle or crossovers; see Fig. 6. Every candidate was given one try without the chance of correcting the trajectory.

After performing the surgical procedures, participants were asked to fill out a questionnaire including 10 questions to determine how closely the whole skull and brain structure model simulated the key steps of ventriculostomy and compare the effectiveness of training with the simulator with that of theoretical learning methods scored on a 5-point Likert scale.

**Results**

**Table 1 A)** Cost estimation for first-time fabrication of exemplary EVD simulator (not including 3D Printer and Mayfield clamp)

| Material | Amount | Cost (USD) | Output |
|---|---|---|---|
| Silicone - 22 Shore A | 2 l | $87 | 1 negative brain mold |
| Filament - PLA | 1 kg | $24 | 1 brain model, 1 skull base, 4 skullcaps |
| Gelatin - 260 Bloom | 0.5 kg | $5 | 4 brain models at 12,5% |
| Water Bucket - 5L | 2 x | $5 | |
| Silicone Tube | 3 m | $4 | |
| Hose Nozzle | 3 x | $9 | |
| | | **Total = $134** (Simulator setup including 16 ventriculostomy simulations) | |

**Table 1 B)** Operating expenses of exemplary EVD simulator

| Material | Amount | Cost (USD) | Output |
|---|---|---|---|
| Filament - PLA | 1 kg | $24 | 8 skullcaps |
| Gelatin - 260 Bloom | 1 kg | $10 | 8 brain models at 12,5% |
| | | **Total = $34** | 32 ventriculostomy simulations |

Table 2: Results from the questionnaire to gauge self-efficacy on a 5-point Likert scale

No. of participants n = 16

s strongly positive.

In general, all participants of the above example portion deemed the simulator as highly realistic and superior to conventional training methods. All neurosurgery residents found that the simulator was of great help in preparing them especially for ventriculostomies.

**Rheological analysis**

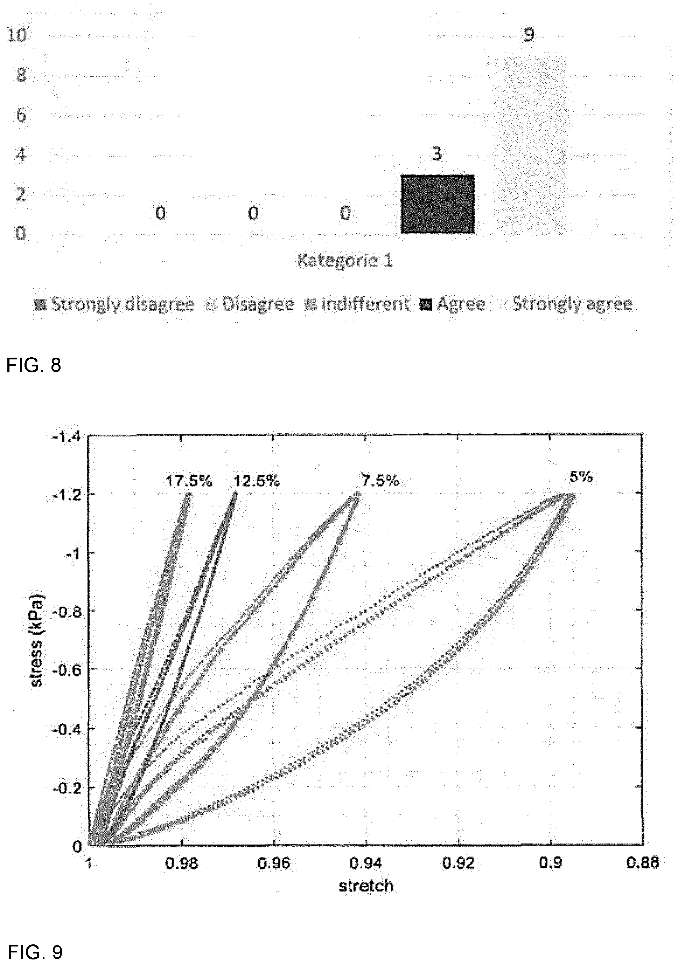

Flexibility: As expected, the sample with 5 % gelatin concentration showed more flexibility and had a stretch of 0.895 mm/mm while the sample with 17.5 % gelatin showed lower stretch properties (approximately 0.9 mm/mm) at room temperature; see Fig. 9.

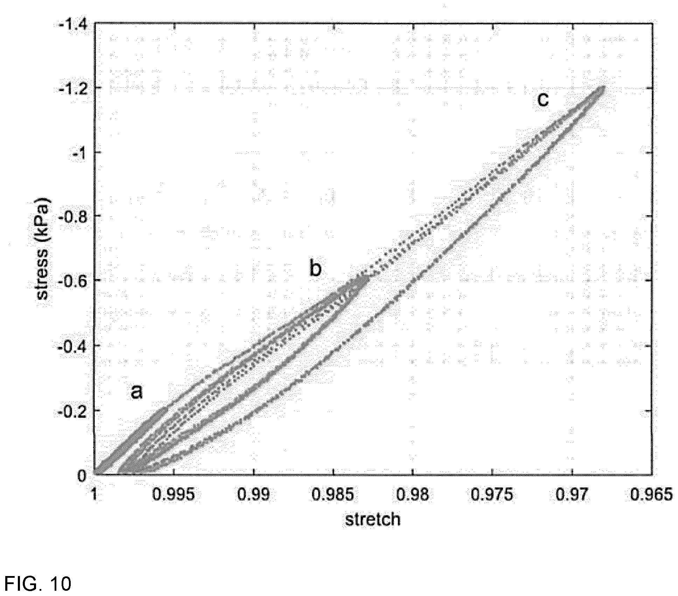

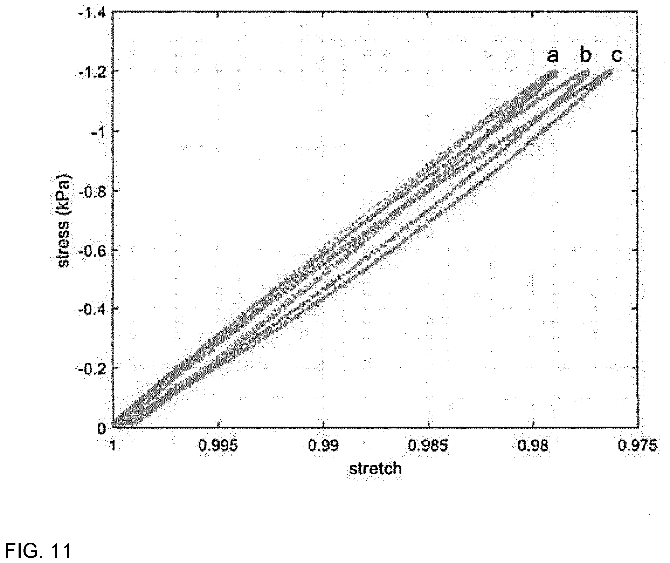

Stress: The stretch increased approximately linearly with respect to the amount of applied stress. It may also be noted that after performing the first cycle, a small permanent deformation had occurred which caused a small shift in the next cycles; see Fig. 10. Frequency: According to the presented results in Fig. 11, the difference between 0.1 Hz and 0.01 Hz, which are consequently the middle and right curve, are negligible.

**Cost analysis**

The operating cost for the herein disclosed exemplary EVD simulator and the respective skull and brain structure model remains relatively low as only the skullcaps and the gelatin brain models are needed for cyclic utilization. Subsequent brain models and skullcaps can be produced with a desktop 3D printer using PLA filaments and bloom 260 gelatin, which costs only a fraction of the price of alternative materials such as polyacrylamide or agar.

While taking into account that each gelatin brain and skullcap can be used up to four times (bilateral Kocher's and Frazier's points), the cost for a single ventriculostomy simulation is approximately $ 1.06 (USD). Table 1A shows the material costs for first-time fabrication of the entire EVD simulator which reflects one example of the herein disclosed skull and brain structure model, which can be as low as $ 116 (USD). Table 1B shows the costs for continued usage of the simulator.

**Efficacy of exemplary EVD simulator**

All participating medical students found that the exemplary EVD simulator improved their understanding of EVD placement and key anatomical landmarks far more than theoretical learning. 100 % of participating medical students thought this training method was more useful than conventional learning methods for training correct head positioning and improving spatial awareness. 93.7 % of participants found that the simulator was of great help in preparing them for surgery - i.e. a pre-operative training. The majority of participating neurosurgeons (87.5 %, n=8) deemed the simulation of the most important steps of EVD placement as life-like and 100 % of participants (n=16) felt that the global visual appearance of the skull and brain structure model was realistic, and that the EVD simulator improved their knowledge of the morphology of the surgical field.

Table 2 shows the average responses to questions formatted as 5-point Likert scales on general usability and future use of the simulator.

**Advantages of the herein disclosed skull and/or brain structure model**

The fundamental assumption of a medical/ surgical simulation-based training is that the skills acquired in simulated settings are directly transferable to the operative setting [18, 19, 20]. The more realistic a model and respective simulation is, the more likely it is that it will help to improve surgical skills of a surgeon such as dexterity and spatial awareness. This is nowhere more important than in the field of neurosurgery as a traditionally high-risk specialty with little margin for error. Specifically in recent years, a variety of approaches to ventriculostomy simulation including 3D-printed skulls and gelatin composite brain models were proposed. However, the simulation quality is often limited due to a lack of anatomical and/or mechanical and/or physiological properties of the models.

A major advantage of the herein disclosed skull and/or brain structure model, especially EVD simulator, lies in its versatility. By providing a clear blueprint for the reconstruction and creation of our model based on real patients' data and with freely available computer software, a user can simulate patient-specific cases or choose to manipulate skull and/or brain and/or, e. g., ventricular anatomy to train for challenging cases such as slit ventricle syndrome or midline shift due to intracranial hemorrhage.

Simulating the skull and/or brain accurately means mimicking the skull and/or brain of a living organism. The rheological analyses revealed a significant difference in mechanical properties of cadaveric brain tissue described in the literature compared to the gelatin concentration samples, which our neurosurgeons deemed to best simulate the mechanical properties of brain tissue in living patients [16]. The inventive approach allows to recreate the tactile properties of the brain using a readily available and cost-effective material. Furthermore, e.g., by focusing on the most crucial steps of EVD placement such as correct head positioning, trajectory training, burr hole placement and ventricle cannulation with real-life success control (i.e. the water flow simulating cerebrospinal fluid), the instant inventors were able to simplify the production process and keep production costs low while maintaining the high quality of the EVD simulator. Another major advantage of the herein disclosed skull and/or brain structure model over existing products is that it can be used for, e.g., a minimum of four ventriculostomies without losing its anatomical, physiological, and haptic properties. This poses a significant advantage that turns the herein disclosed models into the most cost-effective physical ventriculostomy training tools currently in existence and, as such, an important step towards improved, more accessible neurosurgical training around the world.

In view of all the foregoing disclosure, the present invention further comprises the below consecutively numbered embodiments:

1. An ex *vivo* model of a skull and/or brain structure obtainable by the process comprising the steps of:

a. providing one or more imaging data sets of a skull and/or brain structure of a subject, particularly of a patient;
b. reconstructing and/or segmenting the skull and/or brain structure of the subject/patient based on the imaging data sets obtained/provided for under step a) using a suitable computer program;
c. three-dimensional printing of the reconstructed and/or segmented skull and/or brain structure data obtained under step b);
d. and in case of the brain structure, forming a negative model of the obtained brain structure under step c); and
e. casting a surrogate brain structure of the said subject/patient from the negative model obtained under step d) using a gelatin substance;
f. and in case of the skull and brain structure, combining the obtained skull and brain structure, so to form the ex *vivo* model.

In view of the above embodiment 1 it can be derived that the ex *vivo* model of the invention may be related to a mere skull or brain structure itself, i.e. without combining them in a final step, but also to a skull and brain structure in combination; e.g. for a skull and brain structure of a whole skull and brain of a subject/patient, especially for the provision of an EVD model as disclosed herein.

The imaging data sets may be obtained by any suitable medical imaging modality like MRI, CT, CTA, PET, PET-CT or the like.

2. The ex *vivo* model of embodiment 1, wherein the skull and/or brain structure is a whole skull and/or brain of the subject/patient.

3. The ex *vivo* model of embodiment 1 or 2, wherein the skull and/or brain structure is a whole skull and brain of the subject/patient.

In view of the embodiments 1, 2 and 3 it shall be noted that in accordance with the invention the provided ex *vivo* model and the underlying process for its manufacture as well as the uses thereof can relate to a mere structure/part of a skull and/or brain as, e.g., only to a frontal part of each of them, but also to a structure in the sense of a whole skull and/or brain of a subject/patient. For example, the herein disclosed EVD model shall relate to a whole skull and brain structure of a subject/patient, but not necessarily since only parts thereof may be considerable.

4. The ex *vivo* model of any one of the embodiments 1 to 3, wherein the obtained skull structure by the said process is characterised by mimicking three layers of the calvaria being it *lamina externa/tabula externa, diploe/spongiosa*, and *lamina interna/tabula interna.*

5. The ex *vivo* model of any one of the embodiments 1 to 4, wherein the obtained brain structure by the said process is characterised by mimicking a ventricular structure of the said subject/patient, particularly the ventricular system as a whole of the said subject/patient.

In view of embodiment 5, it is one advantageous finding by the inventors that the herein disclosed processes *inter alia* allow for the provision of a brain model including a real-life like ventricular system, which is of utmost importance especially for the use as a real-life EVD model for, e.g., training neurosurgeons.

6. The ex *vivo* model of embodiment 5, wherein the process further comprises the step of applying one or more access points through the skull and/or brain structure for a suitable tubing and applying a suitable tubing in fluid communication with the mimicked ventricular structure or ventricular system, respectively, allowing a fluid such as water to enter and/or leave the mimicked ventricular structure or ventricular system.

In view of embodiment 6 it shall be noted that the ex *vivo* model of the instant invention allows for surgical intervention training of various kinds, e.g., in respect of aneurysms, brain tumour constellations, and especially external ventricular drain situations, but not limited thereto, under a wet environment condition, and so to simulate, e.g., cerebrospinal fluid processes to be handled or avoided under surgery. This being very important during training for an external ventricular drain (EVD) intervention.

7. The ex *vivo* model of any one of the embodiments 1 to 6, wherein the model is a model for the placement of an external ventricular drain, particularly an EVD model.

8. The ex *vivo* model of embodiment 7, wherein the model for the placement of an external ventricular drain, particularly the EVD model, allows for at least two, preferably at least three, more preferably for at least four external ventricular drain placement sessions through different ventriculostomy approaches either simultaneously or consecutively.

9. The ex *vivo* model of embodiment 8, wherein the different ventriculostomy approaches comprising the Kocher's point, the Frazier's point and/or the Kaufmann's point.

10. The ex *vivo* model of any one of the embodiments 1 to 6, wherein the model is a model for an aneurysm.

11. The ex *vivo* model of any one of the embodiments 1 to 6, wherein the model is a model for a brain tumour surgical intervention.

12. The ex *vivo* model of any one of the embodiments 1 to 11, wherein the model allows for at least one, preferably at least two, more preferably at least three, even more preferably at least four surgical training sessions, particularly the training session being a neurosurgical intervention.

13. The ex *vivo* model of any one of the embodiments 1 to 12, wherein the imaging data set(s) is/are MRI- and/or CT- and/or CTA-based imaging data specific to the subject/patient.

14. The ex *vivo* model of any one of the embodiments 1 to 13, wherein the suitable computer program is InVesalius 3 and/or FreeSurfer and/or blender.

15. The ex *vivo* model of any one of the embodiments 1 to 14, wherein the three-dimensional printing is performed by a desktop 3D-printer.

16. The ex *vivo* model of any one of the embodiments 1 to 15, wherein the three-dimensional printing is performed by a Raise3D Pro2 3D-printer.

17. The ex *vivo* model of any one of the embodiments 1 to 16, wherein the three-dimensional printing process comprises the steps of:

- providing a suitable printing material, in particular a PLA-Filament material;
- applying a printing temperature in the range of 150 to 230°C, in particular in between 190 to 210°C;
- setting layer height in a range of 0.15 to 0.3 mm, in particular in the range of 0.2 to 0.27 mm;
- setting filler density in a range of 10 to 20 %, in particular within a range of 12 to 17 %;
- and in case of the skull structure, modifying the filler density of the reconstructed skull parts so to mimic a *tabula interna, tabula externa* and/or *spongiosa.*
- using a Boolean modifier within a blender so to subtract the moulded ventricle system from the brain structure.

18. The ex *vivo* model of any one of the embodiments 1 to 17, wherein the negative model of the brain structure is made of a silicone material.

19. The ex *vivo* model of embodiment 18, wherein the silicone material is a doubling silicone, preferably having a pot life of 5 to 6 minutes.

20. The ex *vivo* model of any one of the embodiments 1 to 19, wherein the gelatin substance having a concentration ranging from 7 to 18 %, preferably from 10 to 14 %, more preferably from 11 to 13 %, most preferred a concentration of 12.5 %.

21. The ex *vivo* model of any one of the embodiments 1 to 20, wherein the gelatin substance is a 260 bloom gelatin.

22. A process for the manufacture of an ex *vivo* model of a skull and/or brain structure, the process comprising the steps of:

g. providing one or more imaging data sets of a skull and/or brain structure of a subject, particularly of a patient;
h. reconstructing and/or segmenting the skull and/or brain structure of the subject/patient based on the imaging data sets obtained/provided for under step g) using a suitable computer program;
i. three-dimensional printing of the reconstructed and/or segmented skull and/or brain structure data obtained under step h);

j. and in case of the brain structure, forming a negative model of the obtained brain structure under step i); and

k. casting a surrogate brain structure of the said subject/patient from the negative model obtained under step j) using a gelatin substance;

l. and in case of the skull and brain structure, combining the obtained skull and brain structure, so to form the ex *vivo* model.

23. The process of embodiment 22, wherein the skull and/or brain structure is a whole skull and/or brain of the subject/patient.

24. The process of embodiment 22 or 23, wherein the skull and/or brain structure is a whole skull and brain of the subject/patient.

25. The process of any one of the embodiments 22 to 24, wherein the process further comprises the step of applying one or more access points through the skull and/or brain structure and applying a suitable tubing thereto in fluid communication with a mimicked ventricular structure or ventricular system of the brain structure, respectively, allowing a fluid such as water to enter and/or leave the mimicked ventricular structure or ventricular system.

Any suitable fluid, e. g. a coloured one, may be used for mimicking bodily fluids in the herein disclosed *ex vivo* models.

26. The process of any one of the embodiments 22 to 25, wherein the model is a model for the placement of an external ventricular drain, particularly an EVD model.

27. The process of any one of the embodiments 22 to 25, wherein the model is a model for an aneurysm.

28. The process of any one of the embodiments 22 to 25, wherein the model is a model for a brain tumour surgical intervention.

29. The process of any one of the embodiments 22 to 28, wherein the imaging data set(s) is/are MRI- and/or CT- and/or CTA-based imaging data specific to the subject/patient.

30. The process of any one of the embodiments 22 to 29, wherein the suitable computer program is InVesalius 3 and/or FreeSurfer and/or blender.

31. The process of any one of the embodiments 22 to 30, wherein the three-dimensional printing is performed by a desktop 3D-printer.

32. The process of any one of the embodiments 22 to 31, wherein the three-dimensional printing is performed by a Raise3D Pro2 3D-printer.

33. The process of any one of the embodiments 22 to 32, wherein the three-dimensional printing process comprises the steps of:

- providing a suitable printing material, in particular a PLA-Filament material;
- applying a printing temperature in the range of 150 to 230°C, in particular in between 190 to 210°C;
- setting layer height in a range of 0.15 to 0.3 mm, in particular in the range of 0.2 to 0.27 mm;
- setting filler density in a range of 10 to 20 %, in particular within a range of 12 to 17 %;
- and in case of the skull structure, modifying the filler density of the reconstructed skull parts so to mimic a *tabula interna, tabula externa* and/or *spongiosa.*
- using a Boolean modifier within a blender so to subtract the moulded ventricle system from the brain structure.

34. The process of any one of the embodiments 22 to 33, wherein the negative model of the brain structure is made of a silicone material.

35. The process of embodiment 34, wherein the silicone material is a doubling silicone, preferably having a pot life of 5 to 6 minutes.

36. The process of any one of the embodiments 22 to 35, wherein the gelatin substance having a concentration ranging from 7 to 18 %, preferably from 10 to 14 %, more preferably from 11 to 13 %, most preferred a concentration of 12.5 %.

37. The process of any one of the embodiments 22 to 36, wherein the gelatin substance is a 260 bloom gelatin.

38. Use of the *ex vivo* model according to any one of the embodiments 1 to 21 for a surgical teaching and/or training.

39. The use of embodiment 38, wherein the surgical teaching is a neurosurgical teaching and/or training.

40. The use of embodiment 38 or 39, wherein the surgical teaching is a teaching and/or training for the placement of an external ventricular drain.

41. Use of the *ex vivo* model according to any one of the embodiments 1 to 21 for a preoperative planning.

42. Use of the *ex vivo* model according to any one of the embodiments 1 to 21, wherein the model is configured as a model for simulating an aneurysm.

43. Use of the *ex vivo* model according to any one of the embodiments 1 to 21, wherein the model is configured as a model for a tumour surgical intervention, particularly being it a brain tumour model.

The herein cited references are consecutively numbered below as well:

## Cited References

1. Cameron JL. William Stewart Halsted. Our surgical heritage. Ann Surg. 1997;225(5):445-458. doi:10.1097/00000658-199705000-00002

2. Ganju A, Aoun SG, Daou MR, et al. The Role of Simulation in Neurosurgical Education: A Survey of 99 United States Neurosurgery Program Directors. World Neurosurg. 2013;80(5):e1-e8. doi:10.1016/j.wneu.2012.11.066

3. Javid P, Aydin A, Mohanna P, Dasgupta P, Ahmed K. Current status of simulation and training models in microsurgery: A systematic review. Microsurgery. 2019;39(7):655-668. doi:10.1002/micr.30513

4. Rehder R. et al.: The role of simulation in neurosurgery.: Childs Nerv Syst 32. 43-54 (2016).

5. Use of 3D printed models in resident edu- cation for the classification of acetabulum fractures. doi:75(6):1679-1684

6. Williams A, McWilliam M, Ahlin J, Davidson J, Quantz MA, Butter A. A simulated training model for laparoscopic pyloromyotomy: Is 3D printing the way of the future? J Pediatr Surg. 2018;53(5):937-941. doi:10.1016/j.jpedsurg.2018.02.016

7. Munz Y, Almoudaris AM, Moorthy K, Dosis A, Liddle AD, Darzi AW. Curriculum-based solo virtual reality training for laparoscopic intracorporeal knot tying: objective assessment of the transfer of skill from virtual reality to reality. Am J Surg. 2007;193(6):774-783. doi:10.1016/j.amjsurg.2007.01.022

8. Poorani ES. Preservative and Fixative Methods of Brain Biopsy- Review. J Pharm Sci. 2015;7:3.

9. Srinivasan VM, O'Neill BR, Jho D, Whiting DM, Oh MY. The history of external ventricular drainage. J Neurosurg. 2014;120(1):228-236. doi:10.3171/2013.6.JNS121577

10. Craven C, Baxter D, Cooke M, et al. Development of a modelled anatomical replica for training young neurosurgeons. Br J Neurosurg. 2014;28(6):707-712. doi:10.3109/02688697.2014.913775

11. Tai BL, Rooney D, Stephenson F, et al. Development of a 3D-printed external ventricular drain placement simulator: technical note. J Neurosurg. 2015;123(4):1070-1076. doi:10.3171/2014.12.JNS141867

12. Ryan JR, Chen T, Nakaji P, Frakes DH, Gonzalez LF. Ventriculostomy Simulation Using Patient-Specific Ventricular Anatomy, 3D Printing, and Hydrogel Casting. World Neurosurg. 2015;84(5):1333-1339. doi:10.1016/j.wneu.2015.06.016

13. Todnem N, Nguyen KD, Reddy V, Grogan D, Waitt T, Alleyne CH. A simple and cost-effective model for ventricular catheter placement training: technical note. J Neurosurg. Published online May 1, 2020:1-4. doi:10.3171/2020.2.JNS19161

14. Prange MT, Margulies SS. Regional, directional, and age-dependent properties of the brain undergoing large deformation. J Biomech Eng. 2002;124(2):244-252. doi:10.1115/1.1449907

15. Franceschini G, Bigoni D, Regitnig P, Holzapfel GA. Brain tissue deforms similarly to filled elastomers and follows consolidation theory. J Mech Phys Solids. 2006;54(12):2592-2620. doi:10.1016/j.jmps.2006.05.004

16. Budday S, Sommer G, Haybaeck J, Steinmann P, Holzapfel GA, Kuhl E. Rheological characterization of human brain tissue. Acta Biomater. 2017;60:315-329. doi:10.1016/j.actbio.2017.06.024

17. Budday S, Ovaert TC, Holzapfel GA, Steinmann P, Kuhl E. Fifty Shades of Brain: A Review on the Mechanical Testing and Modeling of Brain Tissue. Arch Comput Methods Eng. 2020;27(4):1187-1230. doi:10.1007/s11831-019-09352-w

18. Davids J, Manivannan S, Darzi A, Giannarou S, Ashrafian H, Marcus HJ. Simulation for skills training in neurosurgery: a systematic review, meta-analysis, and analysis of progressive scholarly acceptance. Neurosurg Rev. Published online September 18, 2020. doi:10.1007/s10143-020-01378-0

19. Sturm LP, Windsor JA, Cosman PH, Cregan P, Hewett PJ, Maddern GJ. A Systematic Review of Skills Transfer After Surgical Simulation Training. Ann Surg. 2008;248(2):166-179. doi:10.1097/SLA.0b013e318176bf24

20. Dawe SR, Pena GN, Windsor JA, et al. Systematic review of skills transfer after surgical simulation-based training. Br J Surg. 2014;101(9):1063-1076. doi:10.1002/bjs.9482

## Claims

1. An ex *vivo* model of a skull and/or brain structure obtainable by the process comprising the steps of:

   a. providing one or more imaging data sets of a skull and/or brain structure of a subject, particularly of a patient;
   b. reconstructing and/or segmenting the skull and/or brain structure of the subject/patient based on the imaging data sets obtained/provided for under step a) using a suitable computer program;
   c. three-dimensional printing of the reconstructed and/or segmented skull and/or brain structure data obtained under step b);
   d. and in case of the brain structure, forming a negative model of the obtained brain structure under step c); and
   e. casting a surrogate brain structure of the said subject/patient from the negative model obtained under step d) using a gelatin substance;
   f. and in case of the skull and brain structure, combining the obtained skull and brain structure, so to form the ex *vivo* model.

2. The ex *vivo* model of claim 1, wherein the skull and/or brain structure is a whole skull and/or brain of the subject/patient.

3. The ex *vivo* model of claim 1 or 2, wherein the skull and/or brain structure is a whole skull and brain of the subject/patient.

4. The ex *vivo* model of any one of the preceding claims, wherein the obtained skull structure by the said process is **characterised by** mimicking three layers of the calvaria being it *lamina externa/tabula externa, diploe/spongiosa*, and *lamina interna/tabula interna.*

5. The ex *vivo* model of any one of the preceding claims, wherein the obtained brain structure by the said process is **characterised by** mimicking a ventricular structure of the said subject/patient, particularly the ventricular system as a whole of the said subject/patient.

6. The ex *vivo* model of claim 5, wherein the process further comprises the step of applying one or more access points through the skull and/or brain structure for a suitable tubing and applying a suitable tubing in fluid communication with the mimicked ventricular structure or ventricular system, respectively, allowing a fluid such as water to enter and/or leave the mimicked ventricular structure or ventricular system.

7. The ex *vivo* model of any one of the preceding claims, wherein the model is a model for the placement of an external ventricular drain, particularly an EVD model.

8. The ex *vivo* model of claim 7, wherein the model for the placement of an external ventricular drain, particularly the EVD model, allows for at least two, preferably at least three, more preferably for at least four external ventricular drain placement sessions through different ventriculostomy approaches either simultaneously or consecutively.

9. The ex vivo model of claim 8, wherein the different ventriculostomy approaches comprising the Kocher's point, the Frazier's point and/or the Kaufmann's point.

10. The ex vivo model of any one of the preceding claims, wherein the imaging data set(s) is/are MRI- and/or CT- and/or CTA-based imaging data specific to the subject/patient.

11. The ex *vivo* model of any one of the preceding claims, wherein the negative model of the brain structure is made of a silicone material.

12. The ex *vivo* model of any one of the preceding claims, wherein the gelatin substance having a concentration ranging from 7 to 18 %, preferably from 10 to 14 %, more preferably from 11 to 13 %, most preferred a concentration of 12.5 %.

13. The *ex vivo* model of any one of the preceding claims, wherein the gelatin substance is a 260 bloom gelatin.

14. A process for the manufacture of an *ex vivo* model of a skull and/or brain structure, the process comprising the steps of:

g. providing one or more imaging data sets of a skull and/or brain structure of a subject, particularly of a patient;
h. reconstructing and/or segmenting the skull and/or brain structure of the subject/patient based on the imaging data sets obtained/provided for under step g) using a suitable computer program;
i. three-dimensional printing of the reconstructed and/or segmented skull and/or brain structure data obtained under step h);
j. and in case of the brain structure, forming a negative model of the obtained brain structure under step i); and
k. casting a surrogate brain structure of the said subject/patient from the negative model obtained under step j) using a gelatin substance;
l. and in case of the skull and brain structure, combining the obtained skull and brain structure, so to form the *ex vivo* model.

15. Use of the *ex vivo* model according to any one of the claims 1 to 13 for a surgical teaching and/or training, particularly for a neurosurgical teaching and/or training, more particularly for the teaching and/or training for the placement of an external ventricular drain.

FIG. 1

FIG. 2

FIG. 3

FIG. 4

FIG. 5

FIG. 6

FIG. 7

FIG. 8

FIG. 9

FIG. 10

FIG. 11

Europäisches
Patentamt

European
Patent Office

Office européen
des brevets

# EUROPEAN SEARCH REPORT

Application Number

EP 21 20 9156

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/144662 A1 (TASSONE CECILIE [US] ET AL) 24 May 2018 (2018-05-24)<br>* paragraph [0063] – paragraph [0065] *<br>* paragraph [0154] *<br>* paragraph [0148] *<br>* paragraph [0154] – paragraph [0159] *<br>* paragraph [0112] – paragraph [0116] *<br>* paragraph [0117] *<br>* paragraph [0118] *<br>* paragraph [0119] – paragraph [0121] *<br>* paragraph [0122] – paragraph [0124] *<br>* paragraph [0009] *<br>* paragraph [0009] *<br>* paragraph [0087] *<br>----- | 1-15 | INV.<br>G09B23/30 |
| X | US 2017/291359 A1 (KERINS FERGAL [CA] ET AL) 12 October 2017 (2017-10-12)<br>* paragraph [0003] *<br>* paragraph [0008] – paragraph [0017] *<br>* paragraph [0038] – paragraph [0053] *<br>* paragraph [0055] *<br>* paragraph [0059] – paragraph [0060] *<br>* paragraph [0065] – paragraph [0067] *<br>----- | 1-15 | |

**TECHNICAL FIELDS SEARCHED (IPC)**

G09B

The present search report has been drawn up for all claims

| Place of search | Date of completion of the search | Examiner |
|---|---|---|
| Munich | 6 April 2022 | Hanon, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 21 20 9156

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2022

| Patent document cited in search report | | Publication date | Patent family member(s) | | Publication date |
|---|---|---|---|---|---|
| US 2018144662 | A1 | 24-05-2018 | US | 2018144662 A1 | 24-05-2018 |
| | | | US | 2019287423 A1 | 19-09-2019 |
| | | | WO | 2018097923 A1 | 31-05-2018 |
| US 2017291359 | A1 | 12-10-2017 | CA | 2998645 A1 | 30-03-2017 |
| | | | US | 2017291359 A1 | 12-10-2017 |
| | | | WO | 2017049380 A1 | 30-03-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CAMERON JL ; WILLIAM STEWART HALSTED.** Our surgical heritage. *Ann Surg,* 1997, vol. 225 (5), 445-458
- **GANJU A ; AOUN SG ; DAOU MR et al.** The Role of Simulation in Neurosurgical Education: A Survey of 99 United States Neurosurgery Program Directors. *World Neurosurg,* 2013, vol. 80 (5), e1-e8
- **JAVID P ; AYDIN A ; MOHANNA P ; DASGUPTA P ; AHMED K.** Current status of simulation and training models in microsurgery: A systematic review. *Microsurgery,* 2019, vol. 39 (7), 655-668
- **REHDER R et al.** The role of simulation in neurosurgery. *Childs Nerv Syst,* 2016, vol. 32, 43-54
- **WILLIAMS A ; MCWILLIAM M ; AHLIN J ; DAVIDSON J ; QUANTZ MA ; BUTTER A.** A simulated training model for laparoscopic pyloromyotomy: Is 3D printing the way of the future?. *J Pediatr Surg,* 2018, vol. 53 (5), 937-941
- **MUNZ Y ; ALMOUDARIS AM ; MOORTHY K ; DOSIS A ; LIDDLE AD ; DARZI AW.** Curriculum-based solo virtual reality training for laparoscopic intracorporeal knot tying: objective assessment of the transfer of skill from virtual reality to reality. *Am J Surg,* 2007, vol. 193 (6), 774-783
- **POORANI ES.** Preservative and Fixative Methods of Brain Biopsy- Review. *J Pharm Sci,* 2015, vol. 7 (3
- **SRINIVASAN VM ; O'NEILL BR ; JHO D ; WHITING DM ; OH MY.** The history of external ventricular drainage. *J Neurosurg,* 2014, vol. 120 (1), 228-236
- **CRAVEN C ; BAXTER D ; COOKE M et al.** Development of a modelled anatomical replica for training young neurosurgeons. *Br J Neurosurg,* 2014, vol. 28 (6), 707-712
- **TAI BL ; ROONEY D ; STEPHENSON F et al.** Development of a 3D-printed external ventricular drain placement simulator: technical note. *J Neurosurg,* 2015, vol. 123 (4), 1070-1076
- **RYAN JR ; CHEN T ; NAKAJI P ; FRAKES DH ; GONZALEZ LF.** Ventriculostomy Simulation Using Patient-Specific Ventricular Anatomy, 3D Printing, and Hydrogel Casting. *World Neurosurg,* 2015, vol. 84 (5), 1333-1339

- **TODNEM N ; NGUYEN KD ; REDDY V ; GROGAN D ; WAITT T ; ALLEYNE CH.** A simple and cost-effective model for ventricular catheter placement training: technical note. *J Neurosurg,* 01 May 2020, 1-4
- **PRANGE MT ; MARGULIES SS.** Regional, directional, and age-dependent properties of the brain undergoing large deformation. *J Biomech Eng,* 2002, vol. 124 (2), 244-252
- **FRANCESCHINI G ; BIGONI D ; REGITNIG P ; HOLZAPFEL GA.** Brain tissue deforms similarly to filled elastomers and follows consolidation theory. *J Mech Phys Solids,* 2006, vol. 54 (12), 2592-2620
- **BUDDAY S ; SOMMER G ; HAYBAECK J ; STEINMANN P ; HOLZAPFEL GA ; KUHL E.** Rheological characterization of human brain tissue. *Acta Biomater,* 2017, vol. 60, 315-329
- **BUDDAY S ; OVAERT TC ; HOLZAPFEL GA ; STEINMANN P ; KUHL E.** Fifty Shades of Brain: A Review on the Mechanical Testing and Modeling of Brain Tissue. *Arch Comput Methods Eng,* 2020, vol. 27 (4), 1187-1230
- **DAVIDS J ; MANIVANNAN S ; DARZI A ; GIANNAROU S ; ASHRAFIAN H ; MARCUS HJ.** Simulation for skills training in neurosurgery: a systematic review, meta-analysis, and analysis of progressive scholarly acceptance. *Neurosurg Rev,* 18 September 2020
- **STURM LP ; WINDSOR JA ; COSMAN PH ; CREGAN P ; HEWETT PJ ; MADDERN GJ.** A Systematic Review of Skills Transfer After Surgical Simulation Training. *Ann Surg,* 2008, vol. 248 (2), 166-179
- **DAWE SR ; PENA GN ; WINDSOR JA et al.** Systematic review of skills transfer after surgical simulation-based training. *Br J Surg,* 2014, vol. 101 (9), 1063-1076